# EUROPEAN PATENT APPLICATION

(11) **EP 3 845 827 A1**
(43) Date of publication of application: **07.07.2021**
(21) Application number: 19854089.0
(22) Date of filing: 11.06.2019
(51) Int. Cl.: F25B 1/00, C09K 5/04, C10M 105/38, C10M 129/18, C10M 129/66, C10N 30/00, C10N 40/30

(54) **REFRIGERATION CYCLE DEVICE**

(30) Priority: 31.08.2018 JP 2018163601
(71) Applicant: Hitachi-Johnson Controls Air Conditioning, Inc., Tokyo 105-0022 (JP)
(72) Inventor: OTA Ryo, Tokyo 100-8280 (JP); NAITO Koji, Tokyo 105-0022 (JP); UEDA Hideyuki, Tokyo 105-0022 (JP)
(74) Representative: MERH-IP Matias Erny Reichl Hoffmann Patentanwälte PartG mbB
(86) International application number: PCT/JP2019/023124
(87) International publication number: WO 2020/044721

(57) **Abstract**

The present invention is to provide a refrigeration cycle apparatus that has a low GWP of 750 or less and low flammability and that maintains performance and safety for an extended period of time. The refrigeration cycle apparatus includes a compressor (300) that compresses a refrigerant, a condenser that condenses the refrigerant compressed by the compressor (300), a pressure reducer that reduces a pressure of the refrigerant condensed by the condenser, and an evaporator that evaporates the refrigerant reduced in pressure by the pressure reducer. The refrigerant is a mixed refrigerant which contains difluoromethane, pentafluoroethane, and trifluoroiodomethane and which has a global warming potential of 750 or less and a vapor pressure at 25°C of 1.1 MPa or more and 1.8 MPa or less. The compressor (300) is a sealed electric compressor in which a refrigerator oil to lubricate a sliding portion is charged. The refrigerator oil is polyol ester oil and has a water content of 300 ppm by weight or less.

## Description

### TECHNICAL FIELD

The present invention relates to a refrigeration cycle apparatus using a refrigerant having a small global warming potential (GWP).

### BACKGROUND ART

For preventing global warming, various policies on climate change have been internationally implemented. The twenty-first session of the Conference of the Parties (COP21) to the United Nations Framework Convention on Climate Change held in 2015 adopted the Paris Agreement, and a long-term target to be achieved in the future was set. The Paris Agreement intends to keep the international average temperature rise well below 2°C compared with the pre-industrial level while trying to suppress the temperature rise to 1.5°C.

The international average temperature rise is presently about 1°C compared with the pre-industrial level. For suppressing the average temperature rise to within 2°C in the future, the average CO₂ concentration in the atmosphere needs to be suppressed to 450 ppm or less. However, it is estimated, based on the recently confirmed CO₂ emission increase rate, that the average CO₂ average concentration will exceed this level in 30 years from now. It is predicted that a harder effort to suppress the average temperature rise would be needed in the future.

As a refrigerant of a refrigeration air-conditioning apparatus, a fluorine-based refrigerant is often used, except for small-sized apparatuses. Since a bond between carbon and fluorine (C-F bond) reduces the flammability of the compound, the use of a fluorine-based refrigerator increases safety. However, a C-F bond increases an infrared absorption rate of a window region (a wavelength region in which absorption into the atmosphere is unlikely) of earth radiation (which is equivalent to black body radiation of 288 K on average and mainly consists of infrared light). Also, the lifetime of the compound released to the atmosphere is lengthened due to large binding energy. This causes a GWP to become high.

The use and control of a fluorine-based refrigerant is currently regulated by various laws. Controlled apparatuses and substances are stipulated in the "Act on Rational Use and Proper Management of Fluorocarbons (Fluorocarbons Emission Control Law)". Specific controlled substances are ozone-depleting substances (mainly, a fluorine compound containing chlorine or bromine) controlled in the "Act on the Protection of the Ozone Layer Through the Control of Specified Substances and Other Measures" and substances having the greenhouse effect (mainly a high-GWP compound containing hydrogen, fluorine, and carbon) stipulated in the "Act on Promotion of Global Warming Countermeasures".

Known refrigerants for refrigeration air-conditioning apparatuses are R410A [HFC (hydrofluorocarbon) 32/HFC125 (50/50% by weight)] and R404A [HFC125/HFC143a/HFC134a (44/52/4% by weight)]. However, since R410A and R404A have a GWP as high as GWP = 1924 and GWP = 3943 respectively, they are being replaced with an alternative refrigerant having a lower GWP. The GWP and flammability of a refrigerant have a contrary relationship. That is, when the GWP of a refrigerant is lowered, flammability tends to become higher.

For reasons such as thermophysical properties, low GWPs, low toxicity, and low flammability, known examples of this alternative refrigerant include difluoromethane (HFC32) (GWP = 677), 2,3,3,3-tetrafluoropropene (HFO (hydrofluoroolefin) 1234yf) (GWP = 0), 1,3,3,3-tetrafluoropropene (HFO1234ze) (GWP = 1), trifluoroethene (HFO1123) (GWP < 1), and 3,3,3-trifluoropropene (HFO1243zf) (GWP = 0).

Other known examples include mixed refrigerants of HFO and HFC32, HFC125, HFC134a, and others, hydrocarbons such as propane and propylene, and low-GWP hydrofluorocarbons such as monofluoroethane (HFC161) and difluoroethane (HFC152a). A further example includes a low-boiling point compound which has been halogenated with iodine, bromine, chlorine, or the like to become non-flammable.

As a refrigerant for air-conditioners, slightly flammable HFC32 is widely used for room air-conditioners, business-use package air-conditioners, and the like. In the Amendment (November, 2016) of the Regulation on Refrigeration Safety of the High Pressure Gas Safety Act, HFC32, HFO1234yf, and HFO1234ze are classified as "inert gas". However, since these refrigerants are slightly flammable, they are also listed as "specified inert gas". For apparatuses having not less than 5 tons of refrigeration, it is necessary to install a ventilation device and a facility structure for preventing a leaking refrigerant from accumulating or a detection alarm facility in a place where a leaking refrigerant is likely to accumulate.

On the other hand, a non-flammable mixed refrigerant containing HFO1234yf and HFO1234ze which has a GWP of 1500 or less attracts attention as a refrigerant for refrigerators, from the viewpoint of the Fluorocarbons Emission Control Law. For example, a refrigerator using R448A (HFC32/HFC125/HFC134a/HFO1234ze/HFO1234yf) or R449A (HFC32/HFC125/HFC134a/HFO1234yf) is under development. However, R448A or R449A cannot become non-flammable unless the GWP is about 1100 to 1400 at most. Therefore, in lowering the GWP, suppression of flammability is required.

Under such circumstances, R466A (a mixed refrigerant containing three components of HFC32/HFC125/trifluoroiodomethane) was developed by Honeywell Inc. R466A has a GWP of 750 or less and exhibits both a low GWP and low flammability, and is expected to serve as a new refrigerant alternative to the known R410A. Patent Literature 1 and Patent Literature 2 disclose a technology of mixing trifluoroiodomethane (CF3I) to the mixed refrigerant of HFC32 and HFC125 and further adding hydrocarbon and a stabilizer.

### CITATION LIST

### PATENT LITERATURES

Patent Literature 1: JP-A-2018-044169
Patent Literature 2: Japanese Patent No. 5662294

### SUMMARY OF INVENTION

### PROBLEMS TO BE SOLVED BY INVENTION

As described in Patent Literatures 1 and 2, when trifluoroiodomethane is mixed to a refrigerant such as R32 (HFC32), the GWP can be maintained low while suppressing the flammability of the mixed refrigerant. Therefore, a refrigerant which strikes a balance between a low GWP and low flammability can be obtained. According to Patent Literature 1, such a refrigerant and a lubricant (refrigerator oil) used in a compressor are also sufficiently compatible.

However, it has been confirmed that trifluoroiodomethane reacts with water and oxygen to be decomposed, and deteriorated substances such as hydrogen fluoride and hydrogen iodide are generated. When large amounts of water and hydrogen are introduced in a refrigeration cycle for circulating a refrigerant, a function of a refrigerant is impaired due to the decomposition of trifluoroiodomethane, or a refrigerator oil is deteriorated due to the generated deteriorated substances. Accordingly, there is concern about failing to stably maintaining a thermodynamic refrigeration cycle or an operation of a compressor, which lowers performance of a refrigeration cycle apparatus and safety.

Therefore, an object of the present invention is to provide a refrigeration cycle apparatus that has a low GWP of 750 or less and low flammability and that maintains performance and safety for an extended period of time.

### SOLUTION TO PROBLEMS

In order to address the object described above, a refrigeration cycle apparatus according to the present invention includes: a compressor that compresses a refrigerant; a condenser that condenses the refrigerant compressed by the compressor; a pressure reducer that reduces a pressure of the refrigerant condensed by the condenser; and an evaporator that evaporates the refrigerant reduced in pressure by the pressure reducer, in which the refrigerant is a mixed refrigerant which contains difluoromethane, pentafluoroethane, and trifluoroiodomethane and which has a global warming potential of 750 or less and a vapor pressure at 25°C of 1.1 MPa or more and 1.8 MPa or less, the compressor is a sealed electric compressor which includes, in a sealed container, a compression mechanism and a motor to drive the compression mechanism, and a refrigerator oil to lubricate a sliding portion is charged in the sealed electric compressor, the refrigerator oil is polyol ester oil and has a water content of 300 ppm by weight or less, and the polyol ester oil is a compound represented by chemical formula (1) below, a compound represented by chemical formula (2) below, or a mixture thereof [in chemical formulae (1) and (2), R1s each represent an alkyl group having 4 to 9 carbon atoms and may be the same as or different from each other].

### EFFECTS OF INVENTION

According to the present invention, there can be provided a refrigeration cycle apparatus that has a low GWP of 750 or less and low flammability and that maintains performance and safety for an extended period of time.

### BRIEF DESCRIPTION OF DRAWINGS

Fig. 1 is a refrigeration cycle configuration diagram illustrating an example of a multi air-conditioner for buildings as a refrigeration cycle apparatus.
Fig. 2 is a refrigeration cycle configuration diagram illustrating an example of a refrigerator as a refrigeration cycle apparatus.
Fig. 3 is a vertical cross-sectional diagram illustrating an example of a sealed electric compressor.

### DESCRIPTION OF EMBODIMENTS

Hereinafter, a refrigeration cycle apparatus according to an embodiment of the present invention will be described in detail with reference to the drawings.

### <Refrigeration cycle apparatus>

The refrigeration cycle apparatus according to the present embodiment is an apparatus that has the capacity to cool an object to be cooled taking advantage of a thermodynamic refrigeration cycle formed by a refrigerant. The refrigeration cycle apparatus may have the capacity to perform a thermal cycle opposite a refrigeration cycle, as long as it has the capacity to perform cooling. The refrigeration cycle apparatus can be applied to various refrigeration air-conditioning apparatuses such as an air-conditioner and a refrigerator.

The refrigeration cycle apparatus according to the present embodiment includes a compressor that compresses a refrigerant, a condenser that condenses the refrigerant compressed by the compressor, a pressure reducer that reduces a pressure of the refrigerant condensed by the condenser, and an evaporator that evaporates the refrigerant reduced in pressure by the pressure reducer. The compressor to be used is a sealed electric compressor which includes, in a sealed container, a compression mechanism and a motor to drive the compression mechanism, and a refrigerator oil to lubricate a sliding portion is charged in the sealed electric compressor.

Here, the refrigeration cycle apparatus according to the present embodiment and the compressor used in the refrigeration cycle apparatus will be described by illustrating specific examples.

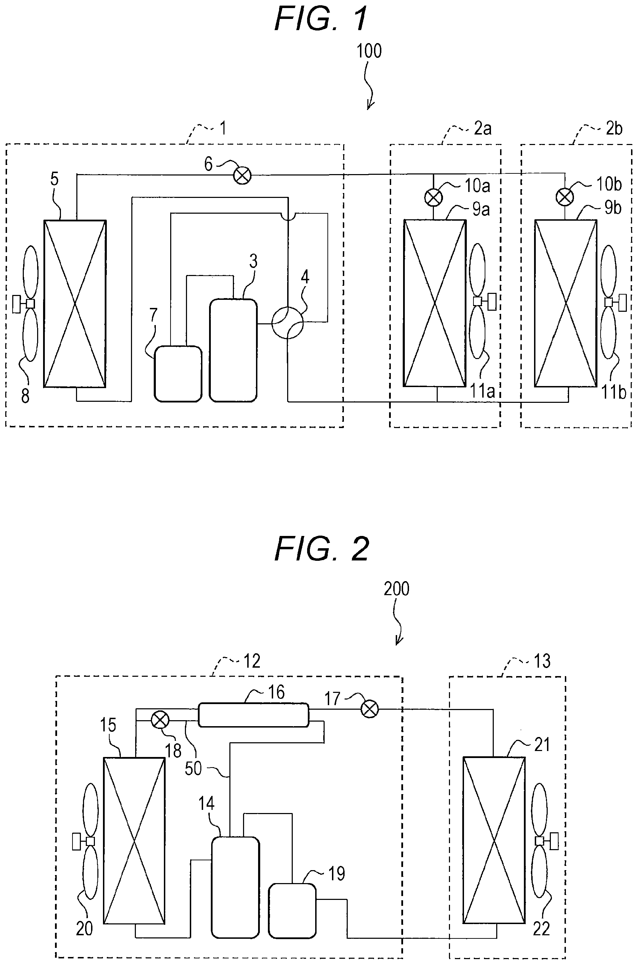

Fig. 1 is a refrigeration cycle configuration diagram illustrating an example of a multi air-conditioner for buildings as a refrigeration cycle apparatus.

The refrigeration cycle apparatus according to the present embodiment can be applied as an air-conditioner such as a multi air-conditioner for buildings (multichamber-type air-conditioner) illustrated in Fig. 1.

As illustrated in Fig. 1, a multi air-conditioner for buildings 100 includes an outdoor unit 1 and indoor units 2a and 2b. It is noted that although the multi air-conditioner for buildings 100 includes two indoor units 2a and 2b in Fig. 1, the multi air-conditioner for buildings 100 can include three or more indoor units (2a, 2b, ···).

The outdoor unit 1 includes a compressor 3, a four-way valve 4, an outdoor heat exchanger (condenser/evaporator) 5, an outdoor expansion valve (pressure reducer) 6, an accumulator 7, and an outdoor air blower 8. The four-way valve 4, the accumulator 7, and the compressor 3 are connected in a closed ring shape via a refrigerant pipe. Also, the indoor units 2a and 2b are connected to another connection part of the four-way valve 4 via a refrigerant pipe. The outdoor heat exchanger 5, the outdoor expansion valve 6, and the indoor units 2a and 2b are connected in this order to the remaining connection part of the four-way valve 4 via a refrigerant pipe.

These devices and the refrigerant pipe connecting the devices form a refrigeration cycle as a circulation path of a refrigerant between the outdoor unit 1 and the indoor units 2a and 2b. A later-described certain refrigerant is charged in the refrigeration cycle. Also, a later-described certain refrigerator oil is charged in the compressor 3 for purposes of lubrication, sealing of a refrigerant, cooling, and the like.

The compressor 3 is a sealed electric compressor which includes, in a sealed container, a compression mechanism and a motor to drive the compression mechanism. The four-way valve 4 can be switched between circulation directions in the circulation cycle of a refrigerant discharged from the compressor 3, depending on a thermodynamic cycle.

The outdoor heat exchanger 5 exchanges heat between a refrigerant and outside air, and functions as a condenser during a cooler operation and as an evaporator during a heater operation. The outdoor expansion valve 6 is constituted by an electronic expansion valve, a thermal expansion valve, or the like, and functions as a pressure reducer during a cooler operation. The accumulator 7 is an apparatus to perform gas-liquid separation between a refrigerant gas and a liquid refrigerant. The outdoor air blower 8 is disposed for delivering outside air into the outdoor heat exchanger 5, and promotes heat exchange between a refrigerant and outside air.

The indoor units 2a and 2b include indoor heat exchangers (evaporators/condensers) 9a and 9b, indoor expansion valves (pressure reducers) 10a and 10b, and indoor air blowers 11a and 11b respectively. When the multi air-conditioner for buildings 100 includes two or more indoor units (2a, 2b, ···), the indoor units can have an identical configuration and be connected to each other via a refrigerant pipe so as to form a parallel refrigeration cycle.

The indoor heat exchangers 9a and 9b each exchange heat between a refrigerant and indoor air, and function as an evaporator during a cooler operation and as a condenser during a heater operation. The indoor expansion valves 10a and 10b are each constituted by an electronic expansion valve, a thermal expansion valve, or the like, and function as a pressure reducer during a heater operation. The indoor air blowers 11a and 11b are disposed for delivering indoor air into the indoor heat exchangers 9a and 9b, and promote heat exchange between a refrigerant and indoor air.

Cooling by the multi air-conditioner for buildings 100 is performed according to the following principle. A high-temperature, high-pressure refrigerant gas adiabatically compressed by the compressor 3 passes through the four-way valve 4 and enters the outdoor heat exchanger 5. The refrigerant gas is cooled by heat exchange with outside air in the outdoor heat exchanger 5 functioning as a condenser, and becomes a high-pressure liquid refrigerant. The high-pressure liquid refrigerant is reduced in pressure and expanded by the outdoor expansion valve 6, and becomes a gas-liquid two-phase refrigerant (a low-temperature, low-pressure liquid refrigerant slightly containing a refrigerant gas). The gas-liquid two-phase refrigerant is delivered into the individual indoor heat exchangers 9a and 9b. The delivered gas-liquid two-phase refrigerant exchanges heat with indoor air in the indoor heat exchangers 9a and 9b functioning as an evaporator, thereby to evaporate and draws heat away, and becomes a low-temperature, low-pressure gas refrigerant. The low-temperature, low-pressure gas refrigerant passes through the four-way valve 4 and enters the accumulator 7, and an unevaporated low-temperature, low-pressure liquid refrigerant is separated. The low-temperature, low-pressure gas refrigerant from which the liquid refrigerant has been separated returns into the compressor 3. Thereafter, the same cycle is repeated to continue cooling.

Heating by the multi air-conditioner for buildings 100 is performed in a cycle opposite that during cooling. A high-temperature, high-pressure refrigerant gas adiabatically compressed by the compressor 3 is delivered into the individual indoor heat exchangers 9a and 9b by switching the four-way valve 4. Then, heat is given to indoor air in the indoor heat exchangers 9a and 9b functioning as a condenser, and thereafter heat is drawn away from outside air in the outdoor heat exchanger 5 functioning as an evaporator. The same cycle is repeated to continue heating.

Fig. 2 is a refrigeration cycle configuration diagram illustrating an example of a refrigerator as a refrigeration cycle apparatus.

The refrigeration cycle apparatus according to the present embodiment can also be applied as a refrigerator illustrated in Fig. 2.

As illustrated in Fig. 2, a refrigerator 200 includes a heat source device 12 and a cooler unit 13. The cooler unit 13 is a device that cools an object to be cooled, and can be in a form such as a showcase or a refrigerating room.

The heat source device 12 includes a compressor 14, a heat source-side heat exchanger (condenser) 15, a supercooler 16, pressure reducers 17 and 18, an accumulator 19, and a heat source-side air blower 20. The cooler unit 13 includes a use-side heat exchanger (evaporator) 21 and a use-side air blower 22.

The accumulator 19, the compressor 14, the heat source-side heat exchanger 15, the supercooler 16, the pressure reducer 17, and the use-side heat exchanger 21 are connected in a closed ring shape via a refrigerant pipe. Also, a supercooling refrigerant circuit 50 branches off from a main refrigerant pipe constituting a refrigeration cycle, on the exist side of the heat source-side heat exchanger 15. The supercooling refrigerant circuit 50 is connected from the main refrigerant pipe to the supercooler 16 and from the other end of the supercooler 16 to the compressor 14.

These devices and the refrigerant pipe connecting the devices form a refrigeration cycle as a circulation path of a refrigerant between the heat source device 12 and the cooler unit 13. In the same manner as the above-described multi air-conditioner for buildings 100, a later-described refrigerant is charged in the refrigeration cycle. Also, a later-described certain refrigerator oil is charged in the compressor 14.

The compressor 14 is a sealed electric compressor which includes, in a sealed container, a compression mechanism and a motor to drive the compression mechanism. The heat source-side heat exchanger 15 exchanges heat between a refrigerant and outside air to function as a condenser that condenses a refrigerant.

The supercooler 16 exchanges heat between a refrigerant flowing through the main refrigerant pipe and a refrigerant flowing through the supercooling refrigerant circuit 50. The pressure reducers 17 and 18 are each constituted by a capillary tube, an expansion valve, or the like. The accumulator 19 is an apparatus to perform gas-liquid separation between a refrigerant gas and a liquid refrigerant. The heat source-side air blower 20 is disposed for delivering outside air into the heat source-side heat exchanger 15 and promotes heat exchange between a refrigerant and outside air.

The use-side heat exchanger 21 exchanges heat between a refrigerant and air inside the unit to function as an evaporator that evaporates a refrigerant. The use-side air blower 22 is disposed for delivering air in the unit into the use-side heat exchanger 21 and promotes heat exchange between a refrigerant and air inside the unit.

Cooling by the refrigerator 200 is performed according to the following principle. A high-temperature, high-pressure refrigerant gas adiabatically compressed by the compressor 14 is delivered into the heat source-side heat exchanger 15. The refrigerant gas is cooled by heat exchange with outside air in the heat source-side heat exchanger 15 functioning as a condenser, and becomes a high-pressure liquid refrigerant. The high-pressure liquid refrigerant partly branches off into the supercooling refrigerant circuit 50 and is reduced in pressure for expansion in the pressure reducer 18 to become a gas-liquid two-phase refrigerant (a low-temperature, low-pressure liquid refrigerant containing a refrigerant gas). The gas-liquid two-phase refrigerant is delivered into the supercooler 16. Meanwhile, a liquid refrigerant as a mainstream flowing through a main refrigerant pipe is directly delivered from the heat source-side heat exchanger 15 into the supercooler 16. Then, the liquid refrigerant as a mainstream is supercooled in the supercooler 16 by heat exchange with the liquid refrigerant which has been reduced in pressure after branching off.

The refrigerant supercooled by the supercooler 16 is reduced in pressure by the pressure reducer 17, and expanded to become a gas-liquid two-phase refrigerant (a low-temperature, low-pressure liquid refrigerant slightly containing a refrigerant gas). The gas-liquid two-phase refrigerant is delivered into the use-side heat exchanger 21. The delivered gas-liquid two-phase refrigerant exchanges heat with air inside the unit in the use-side heat exchanger 21 functioning as an evaporator, thereby to evaporate and draws heat away, and becomes a low-temperature, low-pressure gas refrigerant. The low-temperature, low-pressure gas refrigerant enters the accumulator 19. An unevaporated low-temperature, low-pressure liquid refrigerant is separated. The low-temperature, low-pressure gas refrigerant from which the liquid refrigerant has been separated returns into the compressor 14. Thereafter, the same cycle is repeated to continue refrigeration.

In the compressor 14 for the refrigerator, the compression ratio of a refrigerant is as high as about 10 to 20, and therefore, the discharge temperature of a refrigerant gas is likely to become high. Accordingly, the refrigerant, which has branched off into the supercooling refrigerant circuit 50 to supercool the refrigerant as a mainstream, returns from the supercooler 16 to the intermediate pressure part of the compressor 14 to be used for cooling the refrigerant sucked by the compressor 14. When the refrigerant sucked by the compressor 14 is cooled, the discharge temperature of the compressor 14 decreases, and therefore, a normal operation can be continued.

It is noted that in Fig. 2, the supercooling refrigerant circuit 50 is connected to the compressor 14, and a refrigerant which has branched off into the supercooling refrigerant circuit 50 returns from the supercooler 16 to the intermediate pressure part of the compressor 14. However, the supercooling refrigerant circuit 50 may be connected to a refrigerant pipe on the suction side of the compressor 14, and a refrigerant which has branched off into the supercooling refrigerant circuit 50 may return to the suction side of the compressor 14. Even with such connection, the discharge temperature of the compressor 14 can be decreased.

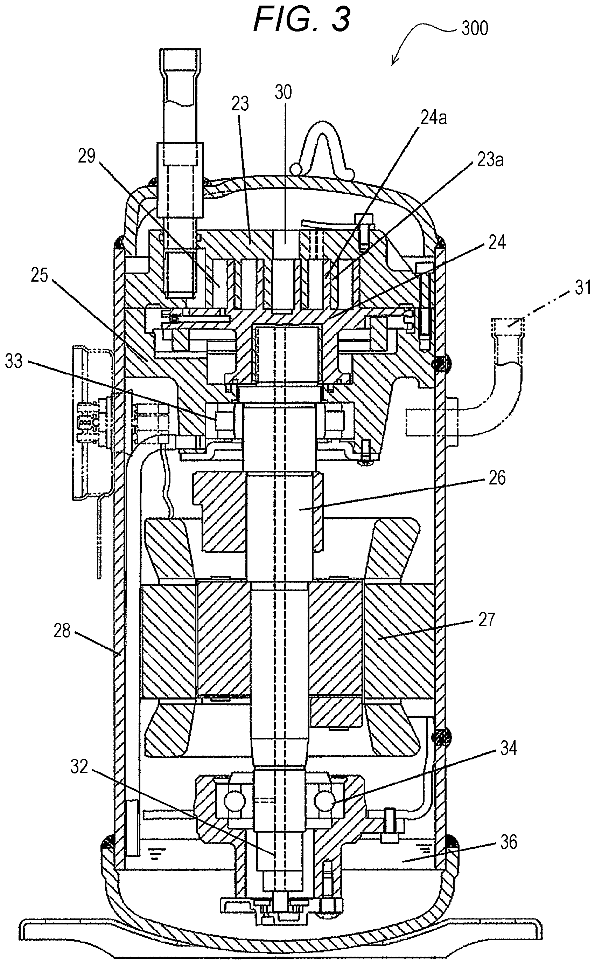

Fig. 3 is a vertical cross-sectional diagram illustrating an example of a sealed electric compressor.

A refrigeration cycle apparatus according to the present embodiment can include, for example, a scroll-type sealed electric compressor as illustrated in Fig. 3 as a compressor that compresses a refrigerant. A sealed electric compressor can be utilized as the compressor 3 for the multi air-conditioner for buildings 100 illustrated in Fig. 1 or as the compressor 14 for the refrigerator 200 illustrated in Fig. 2.

As illustrated in Fig. 3, the sealed electric compressor 300 includes a fixed scroll member 23 having a spiral fixed wrap 23a vertically disposed to an end plate, a revolving scroll member 24 having a spiral revolving wrap 24a having the substantially same shape as the fixed wrap 23a, a frame 25, a crankshaft 26 that revolves the revolving scroll member 24, a motor 27 that drives the crankshaft 26, and a sealed container 28 that houses these components.

The fixed scroll member 23 is bolted to the frame 25. The revolving scroll member 24 slidably engages with an Oldham ring which regulates the rotation of the revolving scroll member 24. The revolving scroll member 24 is supported by a revolving bearing which engages with an eccentric pin that eccentrically drives the revolving scroll member 24.

The fixed scroll member 23 and the revolving scroll member 24 are disposed opposite each other such that the fixed wrap 23a and the revolving wrap 24a engage with each other. This forms a compression mechanism that compresses a refrigerant. A compression chamber 29 is formed between the fixed wrap 23a and the revolving wrap 24a.

The crankshaft 26 is rotatably supported by a main bearing 33 which is a rolling bearing. Also, a sub-shaft portion is rotatably supported by a sub-bearing 34 which is a rolling bearing. A balance weight is attached to a middle part of the crankshaft 26.

The rotation of the crankshaft 26 is driven by the motor 27 at a constant rotation speed or at a rotation speed depending on a voltage controlled by an inverter. The revolving scroll member 24 is configured to revolve eccentrically to the fixed scroll member 23 with the rotation of the crankshaft 26 initiated by the operation 27 of the motor.

In the sealed electric compressor 300, a suction pipe that sucks a refrigerant from the refrigeration cycle as a circulation path of a refrigerant is disposed to the top of the sealed container 28. The suction pipe is connected to a suction port to the compression chamber 29, which is disposed outside the fixed scroll member 23. In response to the rotation movement of the revolving scroll member 24, the compression chamber 29 located outermost moves toward the center of the compression mechanism while gradually shrinking in volume. In association with this movement, a refrigerant introduced into the compression chamber 29 via the suction port is continuously compressed.

When the compression chamber 29 reaches the center of the compression mechanism, it is connected to a discharge port 30 which extends through the fixed scroll member 23. In the sealed container 28, an upper space and a lower space are disposed with the fixed scroll member 23 therebetween. The refrigerant gas compressed by the compression chamber 29 is released from the discharge port 30 into the upper space in the sealed container 28. The refrigerant gas released into the upper space moves into the lower space via a plurality of discharge gas passages extending through the fixed scroll member 23. Then, the refrigerant gas is discharged from a discharge pipe 31, which is disposed in the lower space and extends through the sealed container 28, into the refrigeration cycle as a circulation path of a refrigerant.

In the sealed container 28, an oil reservoir 36 to store a refrigerator oil is disposed below the motor 27. The refrigerator oil in the oil reservoir 36 is sucked due to a pressure difference during the operation of the compression mechanism. Then, the refrigerator oil passes through an oil hole 32 disposed to the crankshaft 26, and is supplied to a sliding portion between the revolving scroll member 24 and the crankshaft 26, a rolling bearing of the main bearing 33 to support a main shaft of the crankshaft 26, a rolling bearing of the sub-bearing 34 to support a sub-shaft portion of the crankshaft 26, and the like.

It is noted that although the sealed electric compressor 300 is a scroll compressor in Fig. 3, the compressor constituting the refrigeration cycle apparatus may be not only a scroll compressor but also, for example, a screw compressor, a rotary compressor, a twin rotary compressor, a two-stage compression rotary compressor, and a swing-type compressor with a roller and a vane integrated.

In an air-conditioner (multi air-conditioner for buildings) as illustrated in Fig. 1 and a refrigerator as illustrated in Fig. 2, a low flammable refrigerant is preferably used from the viewpoint of reducing danger caused by leakage of a refrigerant. Since a multi air-conditioner for buildings is especially high in air-conditioning capacity and large in refrigerant charge amounts, a refrigerant having flammability that is drastically lower than HFC32 and the like is suitable. For an air-conditioner such as a multi air-conditioner for buildings, a refrigerant having a GWP of 750 or less is recommended. For a refrigerator, a refrigerant having a GWP of 1000 or less is recommended.

In the present embodiment, trifluoroiodomethane, which can strike a balance between a low GWP and low flammability, is used as a refrigerant component constituting a mixed refrigerant. In the refrigeration cycle apparatus according to the present embodiment, a mixed refrigerant containing trifluoroiodomethane is used as a refrigerant, and a certain oil having a reduced water content is used as a refrigerator oil.

Trifluoroiodomethane can strike a balance between a low GWP and low flammability. However, when a large amount of water coexists in a refrigeration cycle, trifluoroiodomethane itself is decomposed, and the decomposition leads to generation of deteriorated substances such as hydrogen fluoride, hydrogen iodide, and fluorinated carbonyl. As a result, the function of a refrigerant decreases, and a refrigerator oil or the like is deteriorated. This inhibits the continuation of a normal operation of a refrigeration cycle apparatus.

In contrast to this, when a certain refrigerator oil having a reduced water content is used, the decomposition of trifluoroiodomethane and the generation of deteriorated substances associated with the decomposition can be prevented. Accordingly, the deterioration and degradation of the mixed refrigerant itself or the decomposition of the refrigerator oil or the like by deteriorated substances can be reduced. This can improve long-term reliability regarding refrigerating capacity, durability life, safety, and the like of a refrigeration cycle apparatus.

Hereinafter, the refrigerant and the refrigerator oil used in the refrigeration cycle apparatus according to the present embodiment will be described.

### <Refrigerant>

Specifically, a mixed refrigerant containing difluoromethane (HFC32), pentafluoroethane (HFC125), and trifluoroiodomethane (R13I1) is used as a refrigerant of the refrigeration cycle apparatus. The mixed refrigerant may contain only the three components as refrigerant components or may contain other refrigerant components in addition to the three components. The mixed refrigerant may or may not contain an additive.

Of the refrigerant components, HFC32 is used mainly for ensuring high refrigerating capacity and energy efficiency. HFC125 is used mainly for reducing a temperature gradient. R13I1 is used mainly for lowering the GWP and flammability of the mixed refrigerant itself. As described herein, the temperature gradient indicates a temperature difference between an initiation temperature and an end temperature of a phase change (evaporation/condensation) of a refrigerant.

When these three components are used, there can be obtained a mixed refrigerant that is excellent in refrigerating capacity and energy efficiency, small in temperature gradients, and low in GWPs and flammability. Therefore, there can be obtained a refrigeration cycle apparatus that is high in safety and environmental compatibility and excellent in refrigerating capacity and electric power efficiency.

The refrigerant of the refrigeration cycle apparatus has a global warming potential (GWP) of 750 or less, preferably 500 or less, and more preferably 150 or less. When the GWP is 750 or less, the refrigerant is excellent in environmental properties, high in suitability for legal regulations, and usable in not only a refrigerator but also an air-conditioner. As a GWP, a value (value for 100 years) in the Fifth Assessment Report (AR5) of the Intergovernmental Panel on Climate Change (IPCC) is used. Also, as a GWP of a refrigerant not described in AR5, a value described in another known literature may be used, or a value calculated or measured using a known method may be used.

The GWP of the refrigerant can be adjusted to 750 or less by changing the composition ratio of the mixed refrigerant. HFC32 is GWP = 677, HFC125 is GWP = 3500, and R13I1 is GWP = 0.4.

The refrigerant of the refrigeration cycle apparatus preferably has a saturated vapor pressure at 25°C of 1.1 MPa or more and 1.8 MPa or less. When the saturated vapor pressure is within this range, refrigerating capacity, refrigerant charging properties, and the like equivalent to those of the known refrigeration cycle apparatus using R32, R410A, R404A, and the like can be obtained without significantly changing the system, design, refrigerant piping construction method, and the like.

The saturated vapor pressure of the refrigerant can be adjusted to the above-described range by changing the composition ratio of the mixed refrigerant. The saturated vapor pressure at 25°C is HFC32: about 1.69 MPa, HFC125: about 1.38 MPa, and R13I1: about 0.5 MPa.

In the refrigerant of the refrigeration cycle apparatus, HFC32 is preferably 10% by weight or more, more preferably 20% by weight or more and 80% by weight or less, further preferably 20% by weight or more and 60% by weight or less, and particularly preferably 30% by weight or more and 50% by weight or less. HFC125 is preferably 5% by weight or more and 25% by weight or less. R13I1 is preferably 30% by weight or more and 60% by weight or less. With such a composition, a mixed refrigerant containing slightly flammable HFC32 can become near-azeotropic by HFC125, have a lower GWP by R13I1, and become sufficiently non-flammable by small amounts of HFC125 and R13I1.

The refrigerant of the refrigeration cycle apparatus may contain, in addition to the three components, CO₂, hydrocarbon, ether, fluoroether, fluoroalkene, HFC, HFO, HClFO, HClFO, HBrFO, and the like as other refrigerant components.

It is noted that "HFC" indicates hydrofluorocarbon. "HFO" is a hydrofluoroolefin consisting of a carbon atom, a fluorine atom, and a hydrogen atom, and has at least one carbon-carbon double bond. "HClFO" consists of carbon, chlorine, fluorine, and hydrogen atoms, and has at least one carbon-carbon double bond. "HBrFO" consists of carbon, bromine, fluorine, and hydrogen atoms, and has at least one carbon-carbon double bond.

Examples of HFC include difluoromethane (HFC32), pentafluoroethane (HFC125), 1,1,2,2-tetrafluoroethane (HFC134), 1,1,1,2-tetrafluoroethane (HFC134a), trifluoroethane (HFC143a), difluoroethane (HFC152a), 1,1,1,2,3,3,3-heptafluoropropane (HFC227ea), 1,1,1,3,3,3-hexafluoropropane (HFC236fa), 1,1,1,3,3-pentafluoropropane (HFC245fa), and 1,1,1,3,3-pentafluorobutane (HFC365mfc).

Examples of fluoroalkene include fluoroethene, fluoropropene, fluorobutene, chlorofluoroethene, chlorofluoropropene, and chlorofluorobutene. Examples of fluoropropene include 3,3,3-trifluoropropene (HFO1243zf), 1,3,3,3-tetrafluoropropene (HFO1234ze), 2,3,3,3-tetrafluoropropene (HFO1234yf), and HFO1225. Examples of fluorobutene include C₄H₄F₄, C₄H₃F₅(HFO1345), and C₄H₂F₆(HFO1336).

An example of chlorofluoroethene is C₂F₃Cl(CTFE). Examples of chlorofluoropropene include 2-chloro-3,3,3-trifluoro-1-propene (HCFO1233xf) and 1-chloro-3,3,3-trifluoro-1-propene (HCFO1233zd).

For example, when 2,3,3,3-tetrafluoropropene, 1,3,3,3-tetrafluoropropene, 1,1,1,2-tetrafluoroethane, trifluoroethene, or the like is added as a refrigerant component to the three components, the degree of a temperature gradient, which affects vapor pressure and efficiency related to capacity, can be adjusted.

Specifically, when HFO1123 is added to the three components, the vapor pressure of the mixed refrigerant increases. Also, when an HFO1234-based component is added to the three components, the vapor pressure of the mixed refrigerant decreases. R466A is a refrigerant having a relatively high vapor pressure but decreases in vapor pressure when a HFO1234-based component or the like is added. Therefore, R466A can be used as an alternative refrigerant to R404A. These other refrigerant components may be added to the three components individually or in combination of two or more.

The refrigerant of the refrigeration cycle apparatus can contain an additive such as a stabilizer or a polymerization inhibitor. When a stabilizer or a polymerization inhibitor is added, decomposition of R13I1 having low thermochemical stability is suppressed. This can prevent the deterioration of the mixed refrigerant itself and the generation of deteriorated substances associated with decomposition.

Examples of a stabilizer include epoxy-based compounds, nitro-based compounds, amine-based compounds, benzotriazole-based compounds, and pinene-based compounds. Examples of a polymerization inhibitor include thioether-based compounds, amine-based compounds, nitroso compounds, hydroxyaromatic compounds, and quinone compounds.

### <Refrigerator oil>

As a refrigerator oil of the refrigeration cycle apparatus, polyol ester oil is specifically used. Polyol ester oil is preferably a pentaerythritol-based compound represented by chemical formula (1) below, a dipentaerythritol-based compound represented by chemical formula (2) below, or a mixture thereof. [In chemical formulae (1) and (2), R¹s each represent an alkyl group having 4 to 9 carbon atoms and may be the same as or different from each other.]

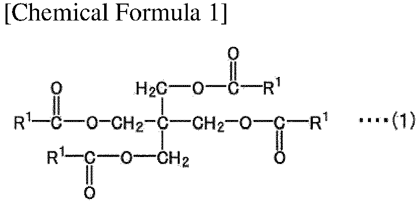

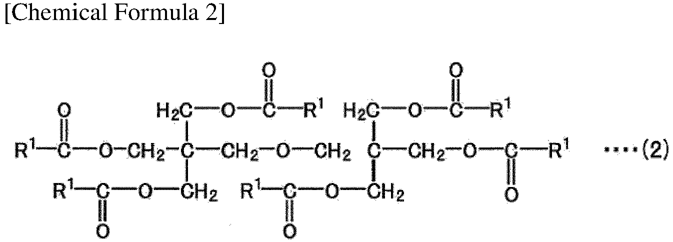

R¹s may be each either a linear alkyl group or a branched alkyl group. Specific examples of R¹ include an n-butyl group, an isobutyl group, a sec-butyl group, a tert-butyl group, an n-pentyl group, an isopentyl group, a sec-pentyl group, a 3-pentyl group, a tert-pentyl group, a neopentyl group, a 1-ethylpentyl group, an isohexyl group, and a 2-ethylhexyl group.

The pentaerythritol-based compound represented by chemical formula (1) and the dipentaerythritol-based compound represented by chemical formula (2) preferably have only a branched alkyl group as R¹. When these compounds are substituted with a branched alkyl group, an ester group is unlikely to react with water and others mixed in the refrigeration cycle. This can effectively suppress the deterioration of the refrigerator oil.

Examples of a known refrigerator oil other than polyol ester oil include paraffin-based mineral oil, naphthene-based mineral oil, poly-α-olefin oil, and soft-type alkylbenzene oil. However, these oils have low compatibility with the mixed refrigerant containing the three components and are easily separated into two layers in a low-temperature part of the refrigeration cycle. Therefore, these oils are not suitable as a refrigerator oil used together with the mixed refrigerant containing the three components.

Further examples of a known refrigerator oil include polyvinyl ether oil and polyalkylene glycol oil. However, an ether group in these oils is likely to be attacked by deteriorated substances generated in association with the decomposition of R13I1. Strong acids such as hydrofluoric acid and hydrogen iodide generated in the coexistence of water exhibit the effect of acting on an ether group to cleave the molecule. Therefore, these oils are not suitable as a refrigerator oil used together with the mixed refrigerant containing the three components.

Also, an extreme pressure agent needs to be added to a refrigerator oil having poor lubricity such as polyvinyl ether oil. However, tricresyl phosphate and the like, which are generally used as an extreme pressure agent, are likely to be decomposed by deteriorated substances generated in association with the decomposition of R13I1. Therefore, the effect as an extreme pressure agent is not exhibited, and the abrasion and wear of a sliding portion of a compressor are not suppressed.

In contrast to this, when polyol ester oil is used as a refrigerator oil, compatibility with the mixed refrigerant containing the three components becomes high. Also, since polyol ester oil has the property that a film thereof formed on a sliding surface is unlikely to be broken, good lubricity can be obtained regardless of the presence or absence of an extreme pressure agent. Also, when polyol ester oil is substituted with a branched alkyl group, the deteriorated substances generated by decomposition of R13I1 and the reactivity with water and others mixed in a refrigeration cycle can be decreased without extremely impairing properties required as a refrigerator oil, such as compatibility and viscosity.

The refrigerator oil of the refrigeration cycle apparatus preferably has a kinematic viscosity at 40°C of 22 mm²/s or more and 84 mm²/s or less. When the kinematic viscosity is within this range, sufficient compatibility can be obtained even at low temperatures. Therefore, such a refrigerator oil can be used in various types of sealed electric compressors without any trouble. Regardless of the type of a compressor, the lubricity of a sliding portion of a compressor and the sealed properties of a compression chamber when a refrigerator oil and a refrigerant dissolve in each other can be adequately ensured.

The kinematic viscosity of the refrigerator oil can be adjusted mainly by changing the composition of polyol ester oil. The kinematic viscosity of the refrigerator oil can be measured in accordance with a standard such as ISO (International Organization for Standardization) 3104 and ASTM (American Society for Testing and Materials) D445 or D7042.

The water content of the refrigerator oil in the refrigeration cycle apparatus is preferably maintained at 300 ppm by weight or less while charged together with the refrigerant in the refrigeration cycle. In general, the water content of the refrigerator oil is decreased during its production. However, water can be mixed in the refrigerator oil during charging into the compressor, or water can enter the refrigeration cycle during production of the refrigeration cycle apparatus. During the operation of the refrigeration cycle apparatus, water mixed in the refrigerator oil or entering the refrigeration cycle is localized mainly in the refrigerator oil phase, and not in the refrigerant phase.

When the water content of the refrigerator oil is decreased to 300 ppm by weight or less, the reaction amount between water and R13I1 or polyol ester oil significantly decreases. This can significantly suppress the decomposition of R13I1 or polyol ester oil. As a result, the generation amount of deteriorated substances associated with the decomposition of R13I1 also decreases extremely. Therefore, the deterioration of the mixed refrigerant itself or the deterioration of the refrigerator oil can be substantially prevented from proceeding during the operation of the refrigeration cycle apparatus. The water content of the refrigerator oil is more preferably 200 ppm by weight or less, further preferably 150 ppm by weight or less, and particularly preferably 100 ppm by weight or less.

The water content of the refrigerator oil can be decreased by, for example, drying treatment of the refrigerator oil, atmosphere adjustment during charging of the refrigerator oil, a pressure reduction degree (such as a vacuum degree) of the vacuum drawing performed to the refrigeration cycle during charging of the refrigerator oil, and disposition of a dryer or a drying agent in the refrigeration cycle. These measures for decreasing the water content may be used in appropriate combinations. The water content of the refrigerator oil can be obtained by, for example, sampling the refrigerator oil mutually dissolving with the refrigerant from the refrigeration cycle as a measurement sample. The water content of the refrigerator oil (water content in oil) can be measured in accordance with JIS K 2275-3:2015 "Crude Petroleum and Petroleum Products - Determination of Water - Part 3: Coulometric Karl Fischer titration method".

The refrigerator oil of the refrigeration cycle apparatus preferably has a low-temperature-side critical solution temperature with the mixed refrigerant containing the three components of -10°C or lower. When the low-temperature-side critical solution temperature is -10°C or lower, the refrigerator oil and the refrigerant are sufficiently compatible. Therefore, the refrigerator oil and the refrigerant can be prevented from separating into two layers in the refrigeration cycle. Since the oil return amount of the refrigerator oil returning into the compressor improves, lubricity of the sliding portion, sealed properties of the refrigerant, cooling properties, and the like in the compressor can be appropriately retained.

The low-temperature-side critical solution temperature can be adjusted mainly by changing the composition of polyol ester oil. The low-temperature-side critical solution temperature can be measured in accordance with the testing method for compatibility stipulated in JIS K 2211. A refrigerator oil and a refrigerant are charged in a pressure resistant glass container, and the contents are observed while changing the temperature. When the contents are clouded, it can be determined that the solution is separated into two layers. When the contents are transparent, it can be determined that the refrigerator oil and the refrigerant dissolve with each other. A temperature at which the solution is separated into two layers can be calculated as a low-temperature-side critical solution temperature.

The refrigerator oil of the refrigeration cycle apparatus can contain, as an additive, a lubricity improver, an antioxidant, a stabilizer, an acid scavenger, a defoamer, a metal deactivator, or the like. From the viewpoint of preventing the corrosion of an inner surface of a coper pipe, a metal deactivator represented by benzotriazole, benzoimidazole, benzothiazole, or the like is desirably formulated.

Examples of the lubricity improver include an extreme pressure agent containing thermochemically stable tertiary phosphates, such as tricresyl phosphate, triphenyl phosphate, trixylenyl phosphate, cresyl diphenyl phosphate, 2-ethylhexyl diphenyl phosphate, and tris(2-ethylhexyl) phosphate.

When the extreme pressure agent is added as an additive, the amount thereof is preferably 0.1% by mass or more and 2.0% by mass or less relative to polyol ester oil. However, polyol ester oil has good lubricity even if the extreme pressure agent is not added, and phosphate ester such as tertiary phosphates is likely to be decomposed by deteriorated substances generated due to the decomposition of R13I1. Therefore, the extreme pressure agent may not be used as an additive of the refrigerator oil.

An example of the antioxidant to be used is a phenol-based antioxidant such as DBPC (2,6-di-t-butyl-p-cresol).

Examples of the stabilizer to be used include an alicyclic epoxy compound and a monoterpene compound. Since the alicyclic epoxy compound reacts with water at low temperatures, water contained in the refrigerator oil can be quickly captured at an early stage of the operation of the refrigeration cycle apparatus. Also, the monoterpene compound captures oxygen and exhibits the effect of suppressing the oxidation and deterioration of the refrigerator oil.

Examples of the alicyclic epoxy compound include 1,2-epoxycyclohexane, 1,2-epoxycyclopentane, 3,4-epoxycyclohexylmethyl-3,4-epoxycyclohexane carboxylate, bis(3,4-epoxycyclohexylmethyl) adipate, exo-2,3-epoxynorbornane, bis(3,4-epoxy-6-methylcyclohexylmethyl) adipate, 2-(7-oxabicyclo[4.1.0]hept-3-yl)-spiro(1,3-dioxane-5,3'-[7]oxabicyclo[4.1.0]heptane, 4-(1'-methylepoxyethyl)-1,2-epoxy-2-methylcyclohexane, and 4-epoxyethyl-1,2-epoxycyclohexane.

The alicyclic epoxy compound is particularly preferably 3,4-epoxycyclohexylmethyl-3,4-epoxycyclohexane carboxylate represented by chemical formula (3) below.

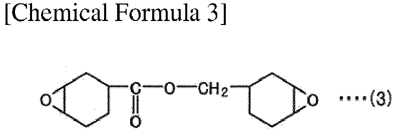

The alicyclic epoxy compound is preferably 0.1% by mass or more and 2.0% by mass or less relative to polyol ester oil.

Examples of the monoterpene compound include monocyclic monoterpene, multicyclic monoterpene, and non-cyclic monoterpene. The monoterpene compound is preferably monocyclic monoterpene. Examples of the monocyclic monoterpene include limonene, α-pinene, β-pinene, and γ-terpinene.

The monoterpene compound is preferably 0.1% by mass or more and 2.0% by mass or less relative to polyol ester oil.

Examples of the acid scavenger to be used include an aliphatic epoxy compound and a carbodiimide-based compound. The aliphatic epoxy compound reacts with water, fatty acid, and the like at low temperatures. Therefore, water, fatty acid, and the like contained in the refrigerator oil can be quickly captured at an early stage of the operation of the refrigeration cycle apparatus. On the other hand, the carbodiimide-based compound reacts with water, fatty acid, and the like at high temperatures. Therefore, water and others remaining in the refrigeration cycle, water newly generated, fatty acid, and the like can be captured during the operation of the refrigeration cycle apparatus.

Examples of the aliphatic epoxy compound include an alkyl glycidyl ester compound and an alkyl glycidyl ether compound.

An example of the alkyl glycidyl ester compound is a compound represented by chemical formula (4) below. [In chemical formula (4), R² represents an alkyl group having 4 to 12 carbon atoms.]

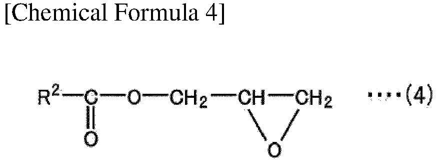

An example of the alkyl glycidyl ether compound is a compound represented by chemical formula (5) below. [In chemical formula (5), R³ represents an alkyl group having 4 to 12 carbon atoms.]

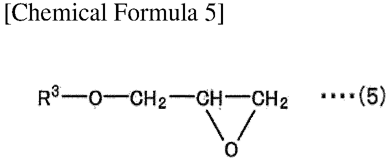

R² and R³ may be each either a linear alkyl group or a branched alkyl group. Specific examples of R² and R³ include an n-butyl group, an isobutyl group, a sec-butyl group, a tert-butyl group, an n-pentyl group, an isopentyl group, a sec-pentyl group, a 3-pentyl group, a tert-pentyl group, a neopentyl group, a 1-ethylpentyl group, an isohexyl group, and a 2-ethylhexyl group.

An example of the carbodiimide compound is a compound represented by chemical formula (6) below. [In chemical formula (6), R⁴ and R⁵ are each independently an alkyl group or an alkyl-substituted aromatic group, and each represent a substituent having at least two -CH(CH₃)₂ or -C(CH₃)₃ moieties in the molecule.]
[Chemical Formula 6]

R⁴-N=C=N-R⁵ ··· (6)

The acid scavenger is preferably 0.1% by mass or more and 2.0% by mass or less relative to polyol ester oil.

The refrigerator oil of the refrigeration cycle apparatus contains, as an additive, preferably at least one of an alicyclic epoxy compound and an aliphatic epoxy compound, more preferably both, and particularly preferably both 3,4-epoxycyclohexylmethyl-3,4-epoxycyclohexane carboxylate and an alkyl glycidyl ester compound.

The alicyclic epoxy compound not only reacts with fatty acid and others generated through the hydrolysis of polyol ester oil, but also exhibits the effect of efficiently capturing hydrogen fluoride and hydrogen iodide generated in association with the decomposition of R13I1. Also, the aliphatic epoxy compound exhibits the effect of quickly capturing water and others. Therefore, the use of a combination of these additives enables quick removal of the mixed water and the generated deteriorated substances immediately after the refrigerator oil has been charged into the refrigeration cycle. This can reliably and continuously prevent the deterioration of the refrigerant, the refrigerator oil, and the like. Also, in the alkyl glycidyl ester compound, an ether group is not attacked, unlike in the alkyl glycidyl ether compound. This can prevent the depletion by deteriorated substances.

According to the refrigeration cycle apparatus according to the present embodiment, a mixed refrigerant containing three components of HFC32/HFC125/R13I1 is used as a refrigerant, and certain polyol ester oil having a reduced water content is used as a refrigerator oil. This can strike a balance between a low GWP and low flammability of the refrigerant and prevent the decomposition of R13I1 while ensuring the compatibility between the refrigerant and the refrigerator oil. Since the decrease of the function of the refrigerant caused by the decomposition of R13I1 and the deterioration of the refrigerator oil, additives, and the like caused by deteriorated substances generated in association with the decomposition can be significantly prevented from proceeding during operation. Accordingly, the performance and safety of the refrigeration cycle apparatus can be appropriately maintained for an extended period of time.

Especially, a mixed refrigerant containing three components of HFC32/HFC125/R13I1 is low in toxicity, and the GWP thereof can be easily decreased to 750 or less while ensuring non-flammability. Also, the vapor pressure can be adjusted appropriately depending on the form of the refrigeration cycle apparatus, for example, to a vapor pressure equivalent to that of R404A. Therefore, the use of a mixed refrigerant containing three components HFC32/HFC125/R13I1 and certain polyol ester oil having a reduced water content can achieve a refrigeration cycle apparatus having high long-time reliability which has a low GWP of 750 or less and low flammability and which maintains performance and safety for an extended period of time.

Although an embodiment of the refrigeration cycle apparatus according to the present invention has been described above, the present invention is not limited to the above-described embodiment and involves various variations, as long as they are not departed from the technical scope. For example, the embodiment is not necessarily limited to that including all the described configurations. Also, configurations in a certain embodiment can be partly replaced with other configurations, or other configurations can be added to configurations in a certain embodiment. Also, for part of configurations of a certain embodiment, addition of other configurations, deletion of a configuration, and replacement of a configuration are possible.

For example, although a multi air-conditioner for buildings and a refrigerator have been illustrated as specific examples of the refrigeration cycle apparatus in the embodiment, the refrigeration cycle apparatus according to the present invention may be applied to a room air-conditioner having one indoor unit or a package air-conditioner. Also, the refrigeration cycle apparatus according to the present invention may be applied to a cooler, a freezer, a heat pump-type hot water dispenser, or the like.

### EXAMPLES

Hereinafter, the present invention will be specifically described by illustrating examples. However, the technical scope of the present invention is not limited to the examples.

### <Test 1>

For combinations of a mixed refrigerant containing HFC32, HFC125, and R13I1 and various refrigerator oils, a relationship between the safety of a mixed refrigerant and a refrigerator oil and the water contained in a refrigerator oil was evaluated by performing an accelerated deterioration test through heating.

The used refrigerant was any one of a mixed refrigerant having a weight ratio of HFC32:HFC125:R13I1 = 50:10:40 which is assumed for a multi air-conditioner for buildings and a mixed refrigerant having a weight ratio of HFC32:HFC125:R13I1 = 28:17:55 which is assumed for a refrigerator.

It is noted that a mixed refrigerant which is assumed for a multi air-conditioner for buildings has a GWP of around 730 and a vapor pressure at 25°C of about 1.46 MPa. A mixed refrigerant which is assumed for a refrigerator has a GWP of around 730 and a vapor pressure at 25°C of about 1.27 MPa.

The used refrigerator oil was any one of the following (A) to (C). It is noted that 0.3% by weight of DBPC was formulated to each refrigerator oil. Also, 1.0% by weight of tricresyl phosphate (TCP), which is a known extreme pressure agent, was formulated to only the refrigerator oil (C) having poor lubricity. No other additives were not formulated to any refrigerator oil in order to correctly evaluate the thermochemical stability of the mixed refrigerant and the refrigerator oil.

(A) Hindered polyol ester oil (H-POE) (mixed fatty acid ester oil of pentaerythritol-based 2-ethylhxanoic acid/3,5,5-trimethylhexanoic acid, kinematic viscosity at 40°C = 64.9 mm²/s)
(B) Hindered polyol ester oil (H-POE) (mixed fatty acid ester oil of pentaerythritol/dipentaerythritol-based 2-methylbutanoic acid/2-ethylhxanoic acid, kinematic viscosity at 40°C = 68.7 mm²/s)
(C) polyvinyl ether oil (PVE) (polymer of alkoxyvinyl, copolymer ether oil of which alkoxy group is an ethyloxy group and an isobutyloxy group, kinematic viscosity at 40°C = 66.8 mm²/s)

### (Accelerated deterioration test)

An accelerated deterioration test was performed in the following procedure. Firstly, a glass container was placed in a washed pressure container (pressure resistance: maximum 20 MPa, inner capacity: 220 mL) in such a manner as not to directly contact the pressure container. Then, 60 g of a refrigerator oil and a metal catalyst were placed in the glass container. The water content of the refrigerator oil was adjusted to either less than 100 ppm by weight or 600 ppm by weight. The water content of the refrigerator oil (water content in oil) was measured in accordance with JIS K 2275-3:2015 "Crude Petroleum and Petroleum Products - Determination of Water - Part 3: Coulometric Karl Fischer titration method". As the metal catalyst, aluminum, copper, and iron (diameter: 2.0 mm, length: 300 mm) were abraded with sandpaper, washed with acetone and ethanol, and thereafter wound into a coil and placed in the glass container.

Subsequently, the glass container containing the refrigerator oil and the metal catalyst was reduced in pressure to 100 Pa or less for vacuum drawing, and thereafter added with 12 g of a refrigerant and sealed. Then, this glass container was heated at 175°C over 504 hours using an autoclave. After heating, the glass container was opened, and the total acid number of the refrigerator oil and the fluorine content of the refrigerator oil were measured. Also, the appearance of the metal catalyst was visually observed. The total acid number of the refrigerator oil was measured in accordance with JIS K 2501:2003 "Petroleum Products and Lubricants - Determination of Neutralization Number". The fluorine content of the refrigerator oil (fluorine content in oil) was measured by combustion ion chromatography. Specifically, a test oil was burned at 1000°C, and a fluorine component trapped by a hydrogen peroxide solution was poured in an ion chromatograph. Measurement was performed with a flow rate of an eluent (Na₂CO₃/NaHCO₃) of 1.5 mL/min using an electric conductivity detector. The fluorine content is mainly derived from R13I1 having low thermochemical stability and serves as an index for the deterioration of the mixed refrigerant itself or the deterioration of the refrigerator oil and others.

Table 1 below illustrates a combination of a refrigerant and a refrigerator oil, a water content of a refrigerator oil, a total acid number of a refrigerator oil, a fluorine content of a refrigerator oil, and an evaluation result of an appearance of a metal catalyst.

**[Table 1]**

| **Sample** | **Refrigerant** | | | **Refrigerator oil** | **Water content in oil (ppm)** | **Total acid number (mgKOH/g)** | **Fluorine content in oil (ppm)** | **Appearance of metal catalyst** |
|---|---|---|---|---|---|---|---|---|
| | **HFC32** | **HFC125** | **R13I1** | | | | | |
| **1-1** | **50** | **10** | **40** | **A** | **100** | **0.06** | **900** | **Not discolored** |
| **1-2** | **50** | **10** | **40** | **A** | **600** | **0.18** | **1200** | **Somewhat discolored** |
| **1-3** | **50** | **10** | **40** | **B** | **100** | **0.07** | **1000** | **Not discolore d** |
| **1-4** | **50** | **10** | **40** | **B** | **600** | **0.21** | **1300** | **Somewhat discolored** |
| **1-5** | **28** | **17** | **55** | **A** | **100** | **0.09** | **1100** | **Not discolored** |
| **1-6** | **28** | **17** | **55** | **A** | **600** | **0.24** | **1300** | **Somewhat discolored** |
| **1-7** | **28** | **17** | **55** | **B** | **100** | **0.12** | **1200** | **Not discolore d** |
| **1-8** | **28** | **17** | **55** | **B** | **600** | **0.29** | **1400** | **Discolored** |
| **1-9** | **50** | **10** | **40** | **C** | **100** | **0.34** | **7200** | **Somewhat discolored** |
| **1-10** | **50** | **10** | **40** | **C** | **600** | **0.55** | **10200** | **Somewhat discolored** |
| **1-11** | **28** | **17** | **55** | **C** | **100** | **0.41** | **9600** | **Somewhat discolored** |
| **1-12** | **28** | **17** | **55** | **C** | **600** | **0.64** | **13600** | **Somewhat discolored** |
| **1-13** | **50** | **10** | **40** | **C (+1.0wt%TCP)** | **100** | **2.35** | **18600** | **Discolored** |
| **1-14** | **50** | **10** | **40** | **C (+1.0wt%TCP)** | **600** | **4.58** | **30600** | **Discolored** |

As illustrated in Table 1, in Samples 1-1 to 1-8 in which polyol ester oil was used as a refrigerator oil, an increase of the total acid number of the refrigerator oil from an initial value (0 mgKOH/g) was small, and the deterioration of the refrigerator oil was sufficiently suppressed. In Samples 1-1 to 1-8 in which polyol ester oil was used as a refrigerator oil, an increase of the fluorine content of the refrigerator oil from an initial value (0 ppm) was small, and the deterioration of the mixed refrigerant was sufficiently suppressed. R13I1 generates a fluorine compound in the coexistence of water. However, in Samples 1 to 8, the generated amount of a fluorine compound was small, with the result that the mixed refrigerant was maintained thermochemically stable.

In Samples 1-1 to 1-8 in which polyol ester oil was used as a refrigerator oil, a sample including a refrigerator oil having a water content of 100 ppm by weight was compared to a sample including a refrigerator oil having a water content of 600 ppm by weight. As a result, it was confirmed that as the water content is smaller, an increase of the total acid number and an increase of the fluorine content are more suppressed. In a sample having a large water content, some discoloration was observed in copper and iron among the metal catalysts. However, in a sample having a small water content, significant discoloration did not occur in the metal catalyst and the refrigerator oil.

In contrast to this, in Samples 1-9 to 1-14 in which polyvinyl ether oil was used as a refrigerator oil, an increase of the total acid number of the refrigerator oil was large, and the deterioration of the refrigerator oil significantly proceeded. In Samples 1-9 to 1-14 in which polyvinyl ether oil was used as a refrigerator oil, an increase of the fluorine content of the refrigerator oil was large, and the deterioration of the mixed refrigerant significantly proceeded. Since R13I1 reacted with water to be decomposed, hydrogen fluoride and others to attack an ether group and the like were generated, and many fluorine ions were accordingly detected.

In Samples 1-9 to 1-14 in which polyvinyl ether oil was used as a refrigerator oil, a sample including a refrigerator oil having a water content of 100 ppm by weight was compared to a sample including a refrigerator oil having a water content of 600 ppm by weight. As a result, even when the water content is small, an increase of the total acid number and an increase of the fluorine content were confirmed. Compared to Samples 1-1 to 1-8 in which polyol ester oil was used, it could be confirmed that the fluorine content significantly increased, the decomposition properties of R13I1 itself were high, and the stability of polyvinyl ether oil was likely to extremely decrease.

In Samples 1-9 to 1-14 in which polyvinyl ether oil was used as a refrigerator oil, a sample containing tricresyl phosphate as an extreme pressure agent was compared to a sample containing no tricresyl phosphate. As a result, it was confirmed that in the sample containing tricresyl phosphate, an increase of the total acid number and an increase of the fluorine content were significant, and the deterioration of the refrigerator oil and the mixed refrigerant proceeded further significantly. It is considered that hydrofluoric acid and hydrogen iodide generated in association with the decomposition of R13I1 reacted with tricresyl phosphate as an extreme pressure agent to decompose and deplete the extreme pressure agent while generating phosphoric acid or the like to increase the total acid number.

In Samples 1-9 to 1-14 in which polyvinyl ether oil was used as a refrigerator oil, the metal catalyst discolored in all samples, and there was not any sample that did not discolor.

### <Test 2>

For combinations with various refrigerator oils, a relationship between the safety of a mixed refrigerant and a refrigerator oil and the water contained in a refrigerator oil was evaluated by an accelerated deterioration test through heating.

The used refrigerant was a mixed refrigerant of HFC32:HFC125:R13I1 = 50:10:40 which is assumed for a multi air-conditioner for buildings, in the same manner as Sample 1-1. The used refrigerator oil was (A) as polyol ester oil, in the same manner as Sample 1-1.

The used additive was any of the following (X) to (Z) as an acid scavenger. The formulation amount of the additive was varied in the range of 0.1 to 2.0% by weight relative to polyol ester oil.

(X) 3,4-epoxycyclohexylmethyl-3,4-epoxycyclohexane carboxylate (Y) alkyl glycidyl ester (mixture including an alkyl group having 4 to 9 carbon atoms) (Z) 2-ethylhexyl glycidyl ether

Table 2 below illustrates a combination of additives, a water content of a refrigerator oil, a total acid number of a refrigerator oil, a fluorine content of a refrigerator oil, and an evaluation result of an appearance of a metal catalyst. An accelerated deterioration test for evaluation was performed in the same manner as the above-described <Test 1>.

**[Table 2]**

| **Sample** | **Refrigerator oil** | **Water content in oil (ppm)** | **Additives** | | | | | | **Total acid number (mgKOH/g)** | **Fluorine content in oil (ppm)** | **Appearance of metal catalyst** |
|---|---|---|---|---|---|---|---|---|---|---|---|
| | | | **Before test (wt.%)** | | | **After test (persistence: %)** | | | | | |
| | | | **X** | **Y** | **Z** | **X** | **Y** | **Z** | | | |
| **2-1** | **A** | **100** | **0.1** | | | **20** | | | **0.05** | **400** | **Somewhat discolored** |
| **2-2** | **A** | **100** | **0.5** | | | **60** | | | **0.02** | **320** | **Not discolored** |
| **2-3** | **A** | **100** | **1.0** | | | **65** | | | **0.01** | **310** | **Not discolored** |
| **2-4** | **A** | **100** | **2.0** | | | **70** | | | **0.01** | **300** | **Not discolored** |
| **2-5** | **A** | **100** | | **0.5** | | | **40** | | **0.04** | **380** | **Not discolored** |
| **2-6** | **A** | **100** | | | **0.5** | | | **70** | **0.06** | **650** | **Not discolored** |
| **2-7** | **A** | **100** | **0.1** | **0.5** | | **50** | **50** | | **0.02** | **280** | **Not discolored** |
| **2-8** | **A** | **100** | **0.5** | **0.5** | | **80** | **40** | | **0.01** | **120** | **Not discolored** |
| **2-9** | **A** | **600** | **0.5** | **0.5** | | **60** | **10** | | **0.01** | **150** | **Not discolored** |
| **2-10** | **A** | **100** | **1.0** | **0.5** | | **85** | **50** | | **0.01** | **100** | **Not discolored** |
| **2-11** | **A** | **100** | **2.0** | **0.5** | | **90** | **55** | | **0.01** | **90** | **Not discolored** |
| **2-12** | **A** | **100** | **0.5** | **0.1** | | **75** | **10** | | **0.02** | **160** | **Not discolored** |
| **2-13** | **A** | **100** | **0.5** | **1.0** | | **80** | **65** | | **0.01** | **130** | **Not discolored** |
| **2-14** | **A** | **100** | **0.5** | **2.0** | | **85** | **70** | | **0.01** | **110** | **Not discolored** |
| **2-15** | **A** | **100** | **0.05** | | | **10** | | | **0.06** | **850** | **Somewhat discolored** |
| **2-16** | **A** | **600** | **0.05** | | | **0** | | | **0.17** | **1160** | **Discolored** |
| **2-17** | **A** | **100** | **3.0** | | | **40** | | | **0.01** | **280** | **Not discolored** |

As illustrated in Table 2, in Samples 2-1 to 2-17 in which an additive (acid scavenger) is added, an increase of the total acid number and an increase of the fluorine content were mostly suppressed compared to Sample 1-1. When the additive is in the range of 0.1 to 2.0% by weight, an increase of the total acid number and an increase of the fluorine content are effectively suppressed, and the persistence of the additive after testing was also roughly high. This demonstrated the possibility that the long-term reliability of the refrigeration cycle apparatus improves. Especially, in Samples 2-7 to 2-14 in which various additives are used in combination, the result was that an increase of the total acid number and an increase of the fluorine content were significantly suppressed.

However, in Sample 2-9 in which the water content of the refrigerator oil is as high as 600 ppm by weight, an increase of the total acid number and an increase of the fluorine content were suppressed, but the persistence of the additives after testing was low. Also, in Samples 2-15 to 2-16 in which the additive is less than the effective amount of 0.1 to 2.0% by weight, the persistence of the additive after testing was low, and an increase of the total acid number and an increase of the fluorine content were not sufficiently suppressed.

When Sample 2-15 including a refrigerator oil having a water content of 100 ppm by weight was compared to Sample 2-16 including a refrigerator oil having a water content of 600 ppm by weight, it was confirmed that as the water content is larger, the persistence of the additive after testing was lower, and an increase of the total acid number and an increase of the fluorine content are less likely to be suppressed. In Sample 2-17 in which the additive is more than the effective amount of 0.1 to 2.0% by weight, an increase of the total acid number and an increase of the fluorine content were sufficiently suppressed, but a large amount of deposits, which were considered a polymer of the additive itself, were observed in the refrigerator oil.

After the accelerated deterioration test, each example was subjected to nuclear magnetic resonance spectroscopy analysis and gas chromatography-mass spectrometry. As a result, a decomposition product associated with the reaction between R13I1 and water was identified. The deterioration mechanism was studied. As a result, it was found that (X) 3,4-epoxycyclohexylmethyl-3,4-epoxycyclohexane carboxylate exhibits the effect of trapping hydrogen fluoride and hydrogen iodide, and (Y) alkyl glycidyl ester reacts with water at an early stage to exhibit the effect of reducing the water content of the refrigerator oil.

### <Test 3>

A refrigeration cycle apparatus including a dryer and a refrigeration cycle apparatus including no dryer were each subjected to a durability test for 3000 hours under high speed, high load conditions.

The used refrigeration cycle apparatus was an apparatus mounted with a scroll-type sealed electric compressor which is an apparatus for a multi air-conditioner for buildings having a cooler capacity of 28 kW. The compressor had a rotation speed of 6000 min⁻¹. For the insulation between an iron core and a coil of a motor, a heat resistant PET film (B type, temperature index: 130°C) having a thickness of 250 µm was used. The used coil was a polyester imide - amide imide double coated copper wire.

The used refrigerant was a mixed refrigerant of HFC32:HFC125:R13I1 = 50:10:40, in the same manner as Sample 1-1. Into a refrigeration cycle, 8000 g of the refrigerant was charged. The used refrigerator oil was an oil obtained by adding 0.5% by weight of (X) and (Y) to (A) as polyol ester oil in the same manner as Sample 2-8.

As a dryer, synthetic zeolite was disposed in the refrigeration cycle. For the refrigeration cycle apparatus including a dryer, 1500 mL of a refrigerator oil which has been dehydrated to have a water content in oil of 200 ppm by weight or less was charged in the compressor. For the refrigeration cycle apparatus including no dryer, 1500 mL of a refrigerator oil which has been adjusted to have a water content in oil of 600 ppm by weight was charged in the compressor.

The refrigeration cycle apparatus including a dryer and the refrigeration cycle apparatus including no dryer each operated over 3000 hours. Thereafter, each compressor was disassembled, and an abrasion state of a sliding portion and a flaking occurrence state on a rolling bearing were checked.

As a result, in the refrigeration cycle apparatus including a dryer, flaking was not observed on rolling elements of a main bearing and a sub-bearing and raceway surfaces of an inner ring and an outer ring. Also, it was confirmed that abrasion was extremely little in sliding portions such as wrap tips of a revolving scroll and a fixed scroll, and an Oldham ring. After the operation for 3000 hours, the total acid number of the refrigerator oil was 0.03 mgKOH/g, the persistence of the additive (X) was 70%, and the persistence of the additive (Y) was 40%. The result was that the deterioration of the refrigerator oil was small, and the depletion of the additive was also small. Thus, it was confirmed that long-term reliability is good.

For the refrigeration cycle apparatus including no dryer, flaking traces were observed on a main bearing. Also, it was confirmed that abrasion was relatively much in sliding portions such as wrap tips of a revolving scroll and a fixed scroll, and an Oldham ring. After the operation for 3000 hours, the total acid number of the refrigerator oil was 0.30 mgKOH/g, the persistence of the additive (X) was 20%, and the persistence of the additive (Y) was 5%. The result was that the deterioration of the refrigerator oil was large, and the depletion of the additive was also large.

As understood from the above results, when a certain refrigerator oil having a reduced water content is used for a refrigeration cycle apparatus using a mixed refrigerant containing three components of HFC32/HFC125/R13I1, the long-term reliability of the refrigeration cycle apparatus can be improved. It is noted that the same effect was obtained in not only an air-conditioner but also a refrigerator, when a mixed refrigerant of HFC32:HFC125:R13I1 = 28:17:55 was used.

In view of the result of <Test 3> in which the water content in oil was adjusted to 200 ppm by weight or less, the specific use amounts of the additives, the initially introduced amount present in the refrigeration cycle before charging of the refrigerator oil, and the like, it is considered that sufficient long-term reliability can be ensured when the water content of the refrigerator oil is 300 ppm by weight or less after charged into the refrigeration cycle.

### DESCRIPTION OF REFERENCE SIGNS

- 1: outdoor unit
- 2: indoor unit
- 3: compressor
- 4: four-way valve
- 5: outdoor heat exchanger (condenser/evaporator)
- 6: outdoor expansion valve (pressure reducer)
- 7: accumulator
- 8: outdoor air blower
- 9: indoor heat exchanger (evaporator/condenser)
- 10: indoor expansion valve (pressure reducer)
- 11: indoor air blower
- 12: heat source device
- 13: cooler unit
- 14: compressor
- 15: heat source-side heat exchanger (condenser)
- 16: supercooler
- 17: pressure reducer
- 18: pressure reducer
- 19: accumulator
- 20: heat source-side air blower
- 21: use-side heat exchanger (evaporator)
- 22: use-side air blower
- 23: fixed scroll member
- 23a: fixed wrap
- 24: revolving scroll member
- 24a: revolving wrap
- 25: frame
- 26: crankshaft
- 27: motor
- 28: sealed container
- 29: compression chamber
- 30: discharge port
- 31: discharge pipe
- 32: oil hole
- 33: main bearing
- 34: sub-bearing
- 36: oil reservoir
- 100: multi air-conditioner for buildings
- 200: refrigerator
- 300: sealed electric compressor

## Claims

1. A refrigeration cycle apparatus comprising:
a compressor that compresses a refrigerant;
a condenser that condenses the refrigerant compressed by the compressor;
a pressure reducer that reduces a pressure of the refrigerant condensed by the condenser; and
an evaporator that evaporates the refrigerant reduced in pressure by the pressure reducer, wherein
the refrigerant is a mixed refrigerant which contains difluoromethane, pentafluoroethane, and trifluoroiodomethane and which has a global warming potential of 750 or less and a vapor pressure at 25°C of 1.1 MPa or more and 1.8 MPa or less,
the compressor is a sealed electric compressor which includes, in a sealed container, a compression mechanism and a motor to drive the compression mechanism, and a refrigerator oil to lubricate a sliding portion is charged in the sealed electric compressor,
the refrigerator oil is polyol ester oil and has a water content of 300 ppm by weight or less, and
the polyol ester oil is a compound represented by chemical formula (1) below, a compound represented by chemical formula (2) below, or a mixture thereof [in chemical formulae (1) and (2), R¹s each represent an alkyl group having 4 to 9 carbon atoms and may be the same as or different from each other]:

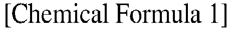

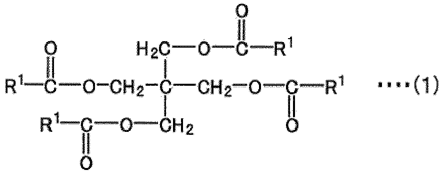

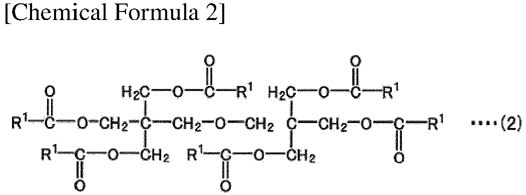

2. The refrigeration cycle apparatus according to claim 1,
wherein the mixed refrigerant contains 20% by weight or more and 60% by weight or less of difluoromethane, 5% by weight or more and 25% by weight or less of pentafluoroethane, and 30% by weight or more and 60% by weight or less of trifluoroiodomethane.

3. The refrigeration cycle apparatus according to claim 1,
wherein the refrigerator oil contains 0.1% by weight or more and 2.0% by weight or less of an alicyclic epoxy compound and 0.1% by weight or more and 2.0% by weight or less of an aliphatic epoxy compound.

4. The refrigeration cycle apparatus according to claim 3,
wherein the alicyclic epoxy compound is 3,4-epoxycyclohexylmethyl-3,4-epoxycyclohexane carboxylate.

5. The refrigeration cycle apparatus according to claim 3,
wherein the aliphatic epoxy compound is alkyl glycidyl ester.
